# EUROPÄISCHE PATENTSCHRIFT

(11) **EP 3 624 978 B1**
(45) Veröffentlichungstag und Bekanntmachung des Hinweises auf die Patenterteilung: **07.06.2023**
(21) Anmeldenummer: 18721059.6
(22) Anmeldetag: 08.05.2018
(51) Int. Cl.: B24B 49/12, B24B 53/085

(54) **MESSUNG VON KENNGRÖSSEN EINES FEINBEARBEITUNGSWERKZEUGS**
MEASUREMENT OF CHARACTERISTIC VARIABLES OF A PRECISION MACHINING TOOL
MESURE DE GRANDEURS CARACTÉRISTIQUES D'UN OUTIL DE FINITION

(30) Priorität: 19.05.2017 CH 6532017
(43) Veröffentlichungstag der Anmeldung: 25.03.2020
(73) Patentinhaber: Reishauer AG, 8304 Wallisellen (CH)
(72) Erfinder: HUG, Theophil, 8360 Wallenwil (CH); JAKOB, Ronald, 8605 Gutenswil (CH)
(74) Vertreter: Detken, Andreas
(86) Internationale Anmeldenummer: PCT/EP2018/061775
(87) Internationale Veröffentlichungsnummer: WO 2018/210607

(56) Entgegenhaltungen:
- EP-A1- 2 484 491
- DE-C1- 19 901 338

## Beschreibung

### TECHNISCHES GEBIET

Die vorliegende Erfindung betrifft eine Vorrichtung und ein Verfahren zur Messung mindestens einer Kenngrösse eines Feinbearbeitungswerkzeugs, insbesondere des Aussendurchmessers des Feinbearbeitungswerkzeugs.

### STAND DER TECHNIK

Bei der Hartfeinbearbeitung eines Zahnrades wird, ähnlich einem Schneckenradgetriebe, eine Schleifschnecke in Eingriff mit dem zu bearbeitenden Zahnrad gebracht, oder es wird eine Profilschleifscheibe mit dem Zahnrad in Eingriff gebracht.

Eine Schleifschnecke ist geometrisch durch eine Vielzahl von Kenngrössen charakterisierbar. Wichtige Kenngrössen sind insbesondere der Aussendurchmesser, die Schneckenbreite, der Modul, die Steigung und die Gangzahl. Auch eine Profilschleifscheibe ist durch verschiedene Kenngrössen charakterisierbar, darunter ebenfalls der Aussendurchmesser und die Scheibenbreite.

Häufig kommen Schleifwerkzeuge zum Einsatz, die abrichtbar sind, insbesondere Schleifwerkzeuge auf Korundbasis. Derartige Schleifwerkzeuge müssen von Zeit zu Zeit abgerichtet (nachprofiliert) werden. Dies erfolgt normalerweise direkt in der Maschine, z.B. zwischen zwei Bearbeitungsprozessen, mittels eines Abrichtwerkzeuges. Durch diesen Abrichtprozess, aber auch durch den Schleifprozess selbst, nützt sich das Schleifwerkzeug ab. Insbesondere wird der Aussendurchmesser laufend kleiner.

Von Zeit zu Zeit muss das Schleifwerkzeug, bedingt durch die Abnützung oder weil ein anderes Zahnrad geschliffen werden soll, ausgetauscht werden. Die Kenngrössen des Schleifwerkzeugs werden beim Werkzeugwechsel meist manuell vom Bediener in die Maschinensteuerung eingegeben. Dabei besteht jedoch immer die Gefahr, dass falsche Kenngrössen in der Maschinensteuerung eingespeichert werden. Die Gefahr einer Fehleingabe besteht insbesondere beim Aussendurchmesser, weil sich dieser, wie vorstehend erläutert wurde, im Laufe der Bearbeitung ändern kann.

Aus DE 199 10 747 A1 ist ein mechanisch-berührendes Verfahren zur automatischen Erkennung des Aussendurchmessers mit Hilfe des Abrichtwerkzeugs bekannt. Dazu wird bei rotierendem Schleifwerkzeug der Abstand zwischen Abrichtwerkzeug und Schleifwerkzeug laufend verringert, bis das Abrichtwerkzeug das Schleifwerkzeug an seinem Aussenumfang berührt. Diese Berührung wird akustisch erkannt.

Da nicht sicher ist, ob bei einem Werkzeugwechsel der Aussendurchmesser des Schleifwerkzeugs korrekt eingegeben wurde, muss dieses Verfahren mit grösster Vorsicht eingesetzt werden, um eine Beschädigung des Schleifwerkzeugs zu vermeiden. Folgendes Vorgehen ist dabei möglich: Zunächst verringert die Maschine den Abstand zwischen Schleifwerkzeug und Abrichtwerkzeug mit hoher Geschwindigkeit bis hin zu einem sicheren Abstand, bei dem auch bei einer Fehleingabe des Aussendurchmessers noch keine Kollisionen zu befürchten sind. Danach verringert die Maschine den Abstand zwischen Schleif- und Abrichtwerkzeug mit stark reduzierter Geschwindigkeit, während sich das Schleifwerkzeug dreht, bis eine Berührung detektiert wird.

Anschliessend können gegebenenfalls weitere Kenngrössen des Schleifwerkzeugs bestimmt werden. Insbesondere wenn das Schleifwerkzeug eine Schleifschnecke ist, kann in einem nächsten Schritt das Schleifwerkzeug von der Seite her zum Abrichtwerkzeug hin verfahren werden, bis wiederum eine Berührung detektiert wird. Dadurch kann die Lage der Stirnseiten der Schleifschnecke festgestellt werden. Da sich die Schleifschnecke dreht, erfolgt die Berührung periodisch in Abhängigkeit von der Lage der Gänge der Schleifschnecke. Auf diese Weise werden Anzahl und Winkellage der Gänge erkannt. Nun kann die Schleifschnecke relativ zum Abrichtwerkzeug derart verfahren werden, dass das Abrichtwerkzeug in eine erste, im vorhergehenden Schritt erfasste Zahnlücke der Schleifschnecke eintaucht. Dort können auf einer ersten Zahntiefe die beiden Flanken der Zahnlücke durch Detektion der Berührung vermessen werden. Derselbe Messvorgang kann anschliessend auf einer zweiten Zahntiefe nochmals ausgeführt werden. Diese Vermessung der Schleifschneckenflanken kann für jeden Schleifschneckengang wiederholt werden. Schliesslich kann die Schleifschnecke noch näher zum Abrichtwerkzeug bewegt werden, um den Innendurchmesser zu bestimmen.

Auch Profilschleifscheiben können mit derartigen berührenden Verfahren vermessen werden. Derartige berührende Verfahren zum Vermessen des Schleifwerkzeugs benötigen jedoch verhältnismässig viel Zeit.

Es besteht daher ein Bedarf für Vorrichtungen und Verfahren, die es ermöglichen, Kenngrössen eines Schleifwerkzeugs, insbesondere dessen Aussendurchmesser, zuverlässig, schnell und präzise zu ermitteln.

DE 100 12 647 A1 offenbart ein Verfahren zum Positionieren eines Werkstücks relativ zu einem Werkzeug, bei dem ein Linienlaser eingesetzt wird. Die Strahlenebene des Linienlasers steht senkrecht zur Werkstückachse. Sie wird relativ zum Werkstück so lange verschoben, bis sie mit einer der Stirnseiten des Werkstücks in Deckung kommt. Auf diese Weise wird die Lage der Stirnseiten des Werkstücks bestimmt.

EP 2 284 484 A1 offenbart ein Verfahren, bei dem ein Aufmass an einem zu bearbeitenden Zahnrad durch Vermessung einer Zahnflanke mittels eines Lasers bestimmt wird.

DE 199 01 338 C1 offenbart ein Verfahren, bei dem Schleifschneckenflanken bei Arbeitsdrehzahl der Schleifschnecke berührungslos mittels einer laseroptischen Abstandsmessung vermessen werden.

EP 2 484 491 A1 offenbart ein Verfahren, bei dem eine rotierende Schleifschnecke unter Einsatz eines Laser-Abstandssensors mittels Triangulation vermessen wird.

### DARSTELLUNG DER ERFINDUNG

Die vorliegende Erfindung stellt eine Feinbearbeitungsmaschine zur Verfügung, mit der sich eine oder mehrere Kenngrössen eines Feinbearbeitungswerkzeugs, insbesondere der Aussendurchmesser, auf einfache Weise und in kurzer Zeit ermitteln lassen. Das Feinbearbeitungswerkzeug kann insbesondere ein Schleifwerkzeug (Schleifschnecke oder Profilschleifscheibe) sein.

Eine derartige Feinbearbeitungsmaschine ist im Anspruch 1 angegeben. Weitere

Ausführungsformen sind in den abhängigen Ansprüchen angegeben.

Es wird also eine Maschine zur Feinbearbeitung von verzahnten Werkstücken gemäss Anspruch 1 angegeben.

Der Abstandssensor kann insbesondere ein berührungslos arbeitender Abstandssensor sein. Bevorzugt ist der Abstandssensor ein optisch arbeitender Abstandssensor, der einen Messlichtstrahl erzeugt. Dabei können die Werkzeugspindel und der Abstandssensor insbesondere derart zueinander ausrichtbar sein, dass die Strahlrichtung die Werkzeugspindelachse schneidet, um den Werkzeugaussendurchmesser zuverlässig durch eine Abstandsmessung bestimmen zu können. Es ist aber auch denkbar, dass der Abstandssensor derart ausrichtbar ist, dass die Strahlrichtung parallel zur Werkzeugspindelachse verläuft. Der Werkzeugaussendurchmesser lässt sich dann z.B. dadurch erkennen, dass der Abstandssensor Abstände für eine Vielzahl von Positionen radial zur Werkzeugspindelachse ermittelt und den Werkzeugaussendurchmesser dadurch erkannt wird, dass sich der so ermittelte Abstand an der radialen Position, die dem Werkzeugaussendurchmesser entspricht, sprungartig ändert.

In anderen Ausführungsformen kann der Abstandssensor z.B. ein induktiv arbeitender Abstandssensor sein. Auch andere Arten von berührungslos arbeitenden Abstandssensoren sind denkbar. Mit derartigen berührungslos arbeitenden Abstandssensoren können Kenngrössen sehr schnell und zuverlässig ermittelt werden.

Alternativ zu einem berührungslos arbeitenden Sensor kann auch ein berührend arbeitender Sensor, beispielhaft ein mechanisch tastender Wegmess-Sensor, verwendet werden. Dieser kann eine breite Tastfläche, z.B. eine Tastfläche mit einer Breite grösser als 5 mm, bevorzugt grösser als 10 mm oder sogar grösser als 20 mm entlang der Werkzeugspindelasche, aufweisen, damit auch bei grösstem Modul stets der Aussendurchmesser berührt wird. Er kann bevorzugt gefedert ausgeführt sein, damit selbst bei hoher Antastgeschwindigkeit das Schleifwerkzeug nicht beschädigt wird.

Mittels des Abstandssensors wird eine Kenngrösse des Feinbearbeitungswerkzeugs bestimmt. Bei der Kenngrösse handelt es sich um den Aussendurchmesser. Zusätzlich können, abhängig von der Art des Feinbearbeitungswerkzeugs und abhängig von der Art des Abstandssensors, noch weitere Kenngrössen ermittelt werden. Wenn das Feinbearbeitungswerkzeug eine Schleifschnecke ist, können die weiteren Kenngrössen z.B. die Anzahl, Winkellage und Tiefe der Schleifschneckengänge, die Lage der Stirnseiten der Schleifschnecke, die Schleifschneckenbreite, den Modul, die Steigung usw. umfassen. Wenn das Feinbearbeitungswerkzeug eine Profilschleifscheibe ist, können die weiteren Kenngrössen z.B. die Länge und Form der Flanken der Schleifscheibe, die Schleifscheibenbreite usw. charakterisieren.

Um die Abstandsmessung durchzuführen und aus Abstandsmessungen Kenngrössen zu ermitteln sowie gegebenenfalls weitere Berechnungen durchzuführen, weist die Steuereinrichtung mindestens einen Prozessor sowie entsprechende Software zur Ausführung auf dem Prozessor auf. Die Steuereinrichtung muss nicht notwendig eine einzelne Einheit sein. So weist die Feinbearbeitungsmaschine vorzugsweise eine CNC-Steuerung auf. Mindestens ein Teil der Steuereinrichtung kann z.B. in einem gemeinsamen Gehäuse mit dem Abstandssensor angeordnet sein, und/oder mindestens ein Teil der Steuereinrichtung kann separat vom Abstandssensor in der CNC-Steuerung der Feinbearbeitungsmaschine ausgebildet sein.

Bei dem Feinbearbeitungswerkzeug kann es sich insbesondere um ein abrichtbares Feinbearbeitungswerkzeug handeln. Die erfindungsgemässe Feinbearbeitungsmaschine ist aber auch im Zusammenhang mit abrichtfreien Werkzeugen von Vorteil, da es auch bei abrichtfreien Werkzeugen nützlich sein kann, Kenngrössen dieser Werkzeuge zu ermitteln. Im Falle von abrichtbaren Werkzeugen ermöglicht es die erfindungsgemässe Feinbearbeitungsmaschine, die Vorbereitungszeit für das Abrichten erheblich zu verkürzen. Insbesondere mittels einer berührungslosen, z.B. optischen Messung lässt sich der Aussendurchmesser sehr schnell bestimmen. Dasselbe gilt, wenn auch in geringerem Ausmass, auch für einen gut gefederten mechanischen Abstandssensor. Wenn erst einmal der Aussendurchmesser bekannt ist, kann der Abstand zwischen Feinbearbeitungswerkzeug und Abrichtwerkzeug sehr schnell verringert werden, bis das Abrichtwerkzeug das Feinbearbeitungswerkzeug nahezu berührt. Wenn zusätzlich auch die Lage der Schleifschneckengänge bestimmt wird, wie das insbesondere mit optischen oder induktiven Sensoren möglich ist, kann das Abrichtwerkzeug direkt in die Schleifschneckengänge eingefädelt werden.

Bei der Feinbearbeitung durch Schleifen ist in der Regel eine hohe Schnittgeschwindigkeit erwünscht. Idealerweise wird die Schnittgeschwindigkeit innerhalb einer Serie von zu schleifenden Zahnrädern im Wesentlichen konstant gehalten, auch wenn sich der Aussendurchmesser des Schleifwerkzeugs durch Abnutzung und Abrichtvorgänge nach und nach verkleinert. Das bedingt, dass die Drehzahl des Schleifwerkzeugs mit sinkendem Werkzeugdurchmesser erhöht wird. Allerdings besteht dabei die Gefahr, dass eine solche Anpassung durch den Bediener unterbleibt oder dass versehentlich eine Drehzahl eingestellt wird, die über der maximal zulässigen Drehzahl des Schleifwerkzeugs beim gegebenen Durchmesser liegt. Im Extremfall kann das zum Bersten des Schleifwerkzeugs führen. Dies stellt ein erhebliches Sicherheitsproblem dar.

Die Steuereinrichtung ist daher dazu ausgebildet, den Werkzeugspindelantrieb derart anzusteuern, dass die Werkzeugspindel in Abhängigkeit vom ermittelten Aussendurchmesser ihre Drehzahl ändert. Insbesondere kann die Steuereinrichtung entsprechende Software aufweisen. Auf diese Weise wird es insbesondere möglich, die Drehzahl derart zu steuern, dass die Oberflächengeschwindigkeit am Aussenumfang des Feinbearbeitungswerkzeugs im Wesentlichen konstant bleibt, auch wenn sich der Aussendurchmesser des Feinbearbeitungswerkzeugs mit der Zeit ändert. Auf diese Weise erfolgt die Bearbeitung des Werkstücks im Wesentlichen mit konstanter Schnittgeschwindigkeit. Damit kann eine gleichbleibende Qualität sichergestellt werden, selbst wenn das Feinbearbeitungswerkzeug mehrmals abgerichtet wurde. Gleichzeitig wird die Sicherheit verbessert, weil die Drehzahl nicht versehentlich zu hoch eingestellt werden kann. Alternativ wird eine Verbesserung der Sicherheit dadurch erreicht, dass die Steuereinrichtung dazu ausgebildet ist, den Werkzeugspindelantrieb derart anzusteuern, dass die Werkzeugspindel eine in Abhängigkeit vom ermittelten Aussendurchmesser veränderliche maximal zulässige Drehzahl nicht überschreitet. Die entsprechende maximal zulässige Drehzahl kann dazu z.B. für ausgewählte Werte des Aussendurchmessers in der Steuereinrichtung in Form einer Look-up-Tabelle hinterlegt sein, wobei die Steuereinrichtung auf diese Tabelle zugreifen kann und daraus die maximal zulässige Drehzahl interpolieren kann.

Wenn das Feinbearbeitungswerkzeug eine Schleifschnecke ist, können aus den vorzugsweise berührungslosen Abstandsmessungen für verschiedene Drehwinkel der Schleifschnecke insbesondere die Anzahl und die Winkellage der Schleifschneckengänge ermittelt werden. Auch hierfür kann die Steuereinrichtung entsprechende Software aufweisen. Dies erleichtert das Einfädeln des Abrichtwerkzeugs oder des ersten Werkstücks einer Serie in die Schleifschneckengänge.

Wird das Schleifwerkzeug während des Abrichtvorgangs oder während des Schleifvorgangs beschädigt (sogenannter Schleifscheibenausbruch), so wird dies im Stand der Technik üblicherweise nicht automatisch erkannt. So erfolgt das einleitend geschilderte berührende Vermessen von Schleifschnecken mit dem Abrichtwerkzeug üblicherweise nur in einem kleinen Breitenbereich, bezogen auf die gesamte Schneckenbreite. Daher können Beschädigungen im Allgemeinen nicht zuverlässig erkannt werden. Das Schleifwerkzeug muss daher vor jedem Schleifzyklus visuell vom Bediener auf Beschädigungen untersucht werden. Ob Beschädigungen erkannt werden, hängt dabei von der Sorgfalt des Bedieners bei der visuellen Inspektion ab.

Um Schleifscheibenausbrüche leichter erkennen zu können, ist die Steuereinrichtung in einer Weiterbildung dazu ausgebildet, mittels des Abstandssensors Abstandsmessungen für eine Vielzahl von Positionen entlang der Werkzeugspindelachse und für eine Vielzahl von Drehwinkeln des Feinbearbeitungswerkzeugs durchzuführen, um so ein Abbild mindestens eines Bereichs der Oberfläche des Feinbearbeitungswerkzeugs zu erhalten. Beispielsweise kann die Steuereinrichtung für eine Vielzahl von Drehwinkeln jeweils ein Profil der Oberfläche des Feinbearbeitungswerkzeugs parallel zur Werkzeugspindelachse erfassen. Indem das so ermittelte Abbild mit dem erwarteten Erscheinungsbild des Oberflächenbereichs verglichen wird, können Schleifscheibenausbrüche leichter erkannt werden. Dieser Vergleich kann automatisch erfolgen, d.h. die Steuereinrichtung kann entsprechende Software aufweisen, die den Vergleich automatisch durchführt.

Um Abstandsmessungen für verschiedene Positionen entlang der Werkzeugspindelachse durchzuführen, können verschiedene Massnahmen vorgesehen sein. Insbesondere kann vorgesehen sein, dass zu diesem Zweck die Werkzeugspindel und der Abstandssensor entlang der Werkzeugspindelachse relativ zueinander verfahrbar sind. Alternativ oder zusätzlich kann der Abstandssensor als sogenannter Profilscanner ausgebildet sein, d.h. er kann dazu ausgebildet sein, Abstandsmessungen für eine Vielzahl von Positionen entlang einer vorgegebenen Profilrichtung, insbesondere entlang einer Profilrichtung parallel zur Werkzeugspindelachse, durchzuführen, um so ein Abstandsprofil entlang der Profilrichtung zu erhalten. Dazu kann der Abstandssensor insbesondere einen Linienlaser umfassen (d.h. einen Laser mit einer Optik, die einen Strahlfächer in einer Strahlebene erzeugt, wobei der Strahlfächer beim Auftreffen auf eine ebene Oberfläche als Linie erscheint). Die Werkzeugspindel und der Abstandssensor sind dann vorzugsweise derart zueinander ausrichtbar, dass die Strahlebene des Linienlasers die Werkzeugspindelachse enthält. In anderen Ausführungsformen kann der Linienlaser derart ausrichtbar sein, dass die Strahlebene, die die Messlinie enthält, in einem beliebigen Winkel zur Werkzeugspindelachse verläuft. Insbesondere ist es auch denkbar, dass die Strahlebene senkrecht zur Werkzeugspindelachse verläuft.

Alternativ kann der Abstandssensor auch als Punktlaser ausgebildet sein. Es ist auch denkbar, zwei oder mehr Abstandssensoren vorzusehen, wobei beispielhaft einer dieser Sensoren ein Punktlaser und der andere Sensor ein Linienlaser sein kann. Abstandssensoren auf der Basis von Punkt- oder Linienlasern sind aus dem Stand der Technik bekannt und kommerziell erhältlich.

In einer Weiterbildung ist die Steuereinrichtung dazu ausgebildet, eine Konsistenzprüfung auszuführen, also die mindestens eine ermittelte Kenngrösse mit einer oder mehreren Vergleichskenngrössen zu vergleichen und Inkonsistenzen zu erkennen. Bei den Vergleichskenngrössen kann es sich insbesondere um Grössen handeln, die zuvor in der Steuereinrichtung abgespeichert worden waren, z.B. Grössen, die manuell in die Maschinensteuerung eingegeben oder auf andere Weise eingelesen worden waren. Dazu kann die Steuereinrichtung wiederum entsprechende Software aufweisen. Insbesondere kann bei der Erkennung von Inkonsistenzen ein entsprechendes Warnsignal an die CNC-Steuerung der Maschine und/oder an den Bediener ausgegeben werden. Auf diese Weise werden möglicherweise schwerwiegende Folgen vermieden, die eintreten können, falls beim Wechsel eines Schleifwerkzeugs versehentlich ein falsches Werkzeug eingesetzt wird oder vom Bediener falsche Kenngrössen eingegeben werden. Dadurch wird die Sicherheit im Betrieb erheblich verbessert.

Um den Abstandssensor für die Messung in eine geeignete Lage relativ zum Feinbearbeitungswerkzeug zu bringen, kann die Maschine einen bewegbaren, insbesondere verschiebbaren oder schwenkbaren Träger aufweisen, der gegenüber dem Maschinenbett in mehrere Stellungen bringbar ist, und der Abstandssensor kann dann auf dem bewegbaren Träger angeordnet sein. Bei dem bewegbaren Träger kann es sich insbesondere um einen Drehteller oder Drehturm handeln.

Vorzugsweise dient der bewegbare Träger nicht nur dazu, den Abstandssensor zum Feinbearbeitungswerkzeug zu bewegen, sondern er erfüllt noch weitere Aufgaben. So können auf dem bewegbaren Träger ausserdem mindestens eine Werkstückspindel zum Aufspannen eines zu bearbeitenden Werkstücks und/oder eine Abrichteinrichtung angeordnet sein. In vorteilhaften Ausgestaltungen sind auf dem bewegbaren Träger mindestens zwei Werkstückspindeln angeordnet, so dass eine der Werkstückspindeln be- und entladen werden kann, während auf der anderen Werkstückspindel ein Werkstück bearbeitet wird. Wenn der bewegbare Träger schwenkbar ist, befindet sich der Abstandssensor dann bezüglich der Umfangsrichtung des schwenkbaren Trägers zwischen den beiden Werkstückspindeln.

In alternativen Ausgestaltungen kann der Werkzeugträger bewegbar, insbesondere verschiebbar oder um eine Achse verschwenkbar sein, um die Werkzeugspindel zum Abstandssensor auszurichten. Statt den Abstandssensor zum Feinbearbeitungswerkzeug zu bewegen, wird also sozusagen das Feinbearbeitungswerkzeug zum Abstandssensor bewegt.

Der Abstandssensor kann in einem Gehäuse aufgenommen sein, um den Abstandssensor vor Umwelteinflüssen zu schützen. Das Gehäuse kann eine Fensteröffnung aufweisen, die zum Schutz vor Umwelteinflüssen mit einer Verschliessvorrichtung (z.B. einer Klappe oder einem Schieber) verschliessbar ist. Alternativ oder zusätzlich kann das Innere des Gehäuses mit Sperrluft beaufschlagbar sein, d.h. mit Luft unter leichtem Überdruck gegenüber dem Umgebungsdruck. Die Sperrluft verhindert, dass sich Verschmutzungen wie z.B. Öltröpfchen am Abstandssensor niederschlagen.

Die vorliegende Erfindung stellt ausserdem Verfahren zur Vermessung eines Feinbearbeitungswerkzeugs mit Hilfe eines Abstandssensors gemäss Anspruch 10 zur Verfügung.

Wie vorstehend schon näher ausgeführt wurde, wird als Kenngrösse ein Mass für den Aussendurchmesser des Feinbearbeitungswerkzeugs ermittelt. Wie schon dargelegt, kann es sich beim Abstandssensor insbesondere um einen optisch arbeitenden Abstandssensor handeln. Das Verfahren kann das Ausrichten eines Messlichtstrahls des optischen Abstandssensors auf das Feinbearbeitungswerkzeug umfassen. Dieses Ausrichten kann insbesondere derart erfolgen, dass eine durch den Messlichtstrahl definierte Strahlrichtung die Werkzeugspindelachse schneidet, um so den Aussendurchmesser durch eine einfache Abstandsmessung bestimmen zu können. In Abhängigkeit vom ermittelten Aussendurchmesser wird die Drehzahl der Werkzeugspindelachse verändert, oder es wird überwacht, dass die Werkzeugspindel mit einer Drehzahl angetrieben wird, die kleiner ist als eine in Abhängigkeit vom ermittelten Aussendurchmesser veränderliche maximal zulässige Drehzahl. Wenn das Feinbearbeitungswerkzeug eine Schleifschnecke ist, kann die Abstandsmessung für eine Vielzahl von Drehwinkeln der Schleifschnecke durchgeführt werden, und aus den Abstandsmessungen können die Gangzahl und Winkellage der Schleifschneckengänge ermittelt werden. Die Abstandsmessung kann für eine Vielzahl von Positionen entlang der Werkzeugspindelachse und für eine Vielzahl von Drehwinkeln des Feinbearbeitungswerkzeugs durchgeführt werden, um ein Abbild mindestens eines Bereichs der Oberfläche des Feinbearbeitungswerkzeugs zu erhalten. Dabei können Abweichungen zwischen dem ermittelten Abbild des Oberflächenbereichs und einem erwarteten Erscheinungsbild des Oberflächenbereichs ermittelt werden. Um Abstandsmessungen für eine Vielzahl von Positionen entlang der Werkzeugspindelachse durchzuführen, können die Werkzeugspindel und der Abstandssensor relativ zueinander entlang der Werkzeugspindelachse verfahren werden. Hierbei können beispielsweise der Anfang und das Ende des Feinbearbeitungswerkzeugs, insbesondere der Schleifschnecke oder der Profilscheibe, sowie ihre Position bzw. Positionen auf der Werkzeugspindelachse festgestellt werden. Die ermittelten Kenngrössen können mit zuvor in der Steuerung abgespeicherten Vergleichskenngrössen verglichen werden, um Inkonsistenzen zu erkennen. Vorteilhafterweise können auch Kenngrössen lernend im Bearbeitungsprozess ermittelt werden, die dann ebenfalls der Steuerung zur Verfügung stehen.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht einer Feinbearbeitungsmaschine gemäss einer ersten Ausführungsform;
- Fig. 2: eine vergrösserte Detailansicht der Maschine der Fig. 1, wobei der Drehturm gegenüber der Fig. 1 um 90° verschwenkt wurde;
- Fig. 3: die Detailansicht der Fig. 2 im Teilschnitt;
- Fig. 4: eine schematische Skizze zur Verdeutlichung des Zusammenwirkens von Abstandssensor und CNC-Steuerung;
- Fig. 5: eine schematische Skizze zur Verdeutlichung der Strahlrichtung des Abstandssensors relativ zur Werkstückspindelachse;
- Fig. 6: eine schematische Skizze zur Verdeutlichung der Vermessung einer Schleifschnecke mit einem einzelnen Abstandssensor;
- Fig. 7: eine schematische Skizze zur Verdeutlichung der Vermessung einer Schleifschnecke mit zwei im Winkel zueinander angeordneten Abstandssensoren;
- Fig. 8: eine schematische Ansicht einer Feinbearbeitungsmaschine gemäss einer zweiten Ausführungsform;
- Fig. 9: einen vergrösserten Ausschnitt aus der Fig. 8;
- Fig. 10: eine schematische Ansicht einer Feinbearbeitungsmaschine gemäss einer dritten Ausführungsform
- Fig. 11: die Feinbearbeitungsmaschine der Fig. 10 in einer Stellung, in der der Werkzeugträger in eine Messposition geschwenkt wurde.

### BESCHREIBUNG BEVORZUGTER AUSFÜHRUNGSFORMEN

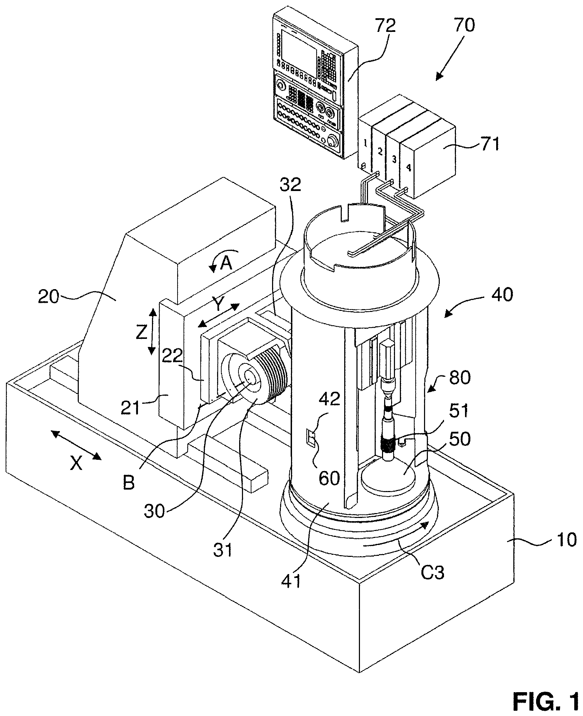

In der Fig. 1 ist eine Feinbearbeitungsmaschine zur Hartfeinbearbeitung von Zahnrädern durch Wälzschleifen dargestellt. Die Maschine weist ein Maschinenbett 10 auf, auf dem ein Werkzeugträger 20 entlang einer horizontalen Zustellrichtung X verschiebbar angeordnet ist. Ein Z-Schlitten 21 ist entlang einer vertikalen Richtung Z verschiebbar am Werkzeugträger 20 angeordnet. Auf dem Z-Schlitten 21 ist ein Y-Schlitten 22 angeordnet, der gegenüber dem Z-Schlitten 21 einerseits um eine Schwenkachse A parallel zur X-Achse verschwenkbar und andererseits entlang einer Shiftrichtung Y verschiebbar ist. Der Y-Schlitten 22 trägt eine Werkzeugspindel 30, auf der ein Feinbearbeitungswerkzeug in Form einer Schleifschnecke 31 aufgespannt ist. Die Werkzeugspindel 30 umfasst einen Werkzeugspindelantrieb 32, um die Schleifschnecke 31 zu einer Drehung um eine Werkzeugspindelachse B anzutreiben.

Auf dem Maschinenbett 10 ist ein schwenkbarer Träger in Form eines Drehturms 40 angeordnet. Der Drehturm 40 ist um eine vertikale Achse C3 zwischen mehreren Drehstellungen verschwenkbar. Er trägt zwei Werkstückspindeln 50, auf denen jeweils ein Werkstück 51 aufspannbar ist. Jede der Werkstückspindeln 50 ist zu einer Drehung um eine Werkstückspindelachse antreibbar. Die beiden Werkstückspindeln befinden sich auf dem Drehturm in diametral gegenüberliegenden (d.h. bezüglich der Schwenkachse des Drehturms um 180° versetzten) Positionen. Auf diese Weise kann eine der beiden Werkstückspindeln be- und entladen werden, während ein Werkstück auf der anderen Werkstückspindel durch die Schleifschnecke 31 bearbeitet wird. Dadurch werden unerwünschte Nebenzeiten weitgehend vermieden. Ein derartiges Maschinenkonzept ist z.B. aus WO 00/035621 A1 bekannt.

Um beispielsweise 90° zu den Werkstückspindeln versetzt ist am Drehturm eine Abrichteinrichtung 80 angeordnet, die sich in der Fig. 1 auf der Rückseite des Drehturms 40 befindet und daher in der Darstellung der Fig. 1 nicht erkennbar ist.

Diametral gegenüberliegend zur Abrichteinrichtung und damit ebenfalls beispielsweise um 90° zu den Werkstückspindeln versetzt ist am Drehturm 40 ein Abstandssensor 60 angeordnet. Im vorliegenden Beispiel handelt es sich um einen optischen Abstandssensor. Dieser ist durch eine Verkleidung 41 vor Verschmutzungen geschützt. Um Messungen mit dem Abstandssensor 60 zu ermöglichen, weist die Verkleidung 41 eine Fensteröffnung 42 auf, die optional durch einen Schieber oder eine Klappe verschliessbar sein kann. Um den Abstandssensor 60 vor Verschmutzungen zu schützen, ist es von Vorteil, wenn das Innere der Verkleidung 41 mit Sperrluft (d.h. mit Luft unter einem gewissen Überdruck gegenüber dem Umgebungsdruck) beaufschlagt wird, so dass ein Luftstrom durch die Fensteröffnung 42 hindurch entsteht. Der Luftstrom streicht über den Abstandssensor 60 hinweg und verhindert, dass sich Verschmutzungen wie z. B. Öltröpfchen auf dem Abstandssensor 60 festsetzen.

Die Maschine weist eine CNC-Steuerung 70 auf, welche mehrere Steuerungsmodule 71 sowie eine Bedientafel 72 umfasst. Jedes der Steuerungsmodule 71 steuert eine Maschinenachse an und/oder empfängt Signale von relevanten Sensoren. Im vorliegenden Beispiel ist eines der Steuerungsmodule 71 dazu vorgesehen, mit dem Abstandssensor 60 zusammenzuwirken. Dieses Modul kommuniziert mit der internen Steuerung des Abstandssensors 60 und verarbeitet die Messergebnisse des Abstandssensors 60. Gemeinsam bilden die interne Steuerung des Abstandssensors 60 und das damit zusammen wirkende Steuerungsmodul 71 eine Steuereinrichtung im Sinne dieses Dokuments.

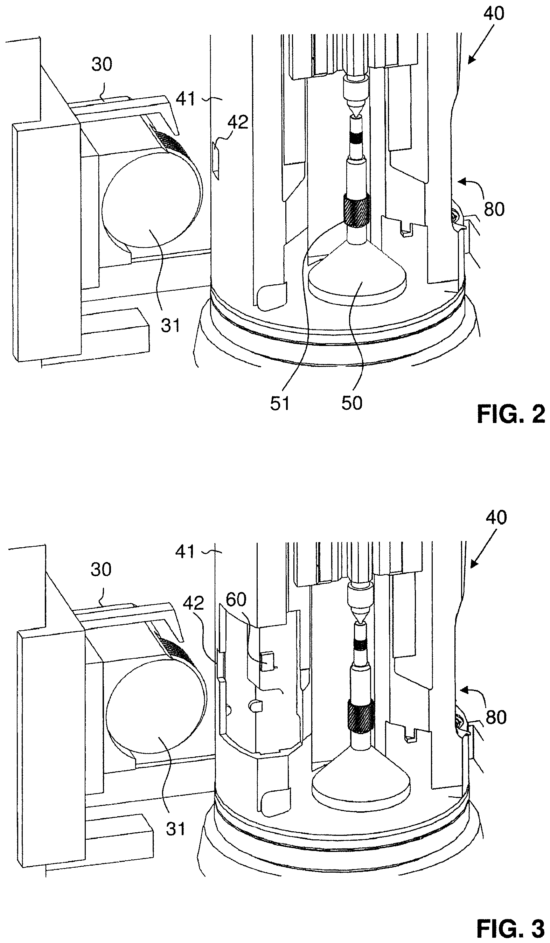

In der Fig. 2 ist ein vergrösserter Ausschnitt der Maschine der Fig. 1 dargestellt. Die Fig. 3 zeigt denselben Ausschnitt in einem Teilschnitt, bei dem ein Teil der Verkleidung 41 ausgeschnitten wurde, um den Blick auf den Abstandssensor 60 im Inneren der Verkleidung 41 freizugeben. Der Drehturm ist in dieser Darstellung gegenüber der Orientierung der Fig. 1 beispielsweise um 90° um seine vertikale Schwenkachse C3 verschwenkt, so dass sich der Abstandssensor 60 nun gegenüberliegend von der Schleifschnecke 31 befindet. Der Abstandssensor 60 ist dabei so ausgerichtet, dass die Strahlrichtung des von ihm ausgesandten Messlichtstrahls die Werkzeugspindelachse B senkrecht schneidet.

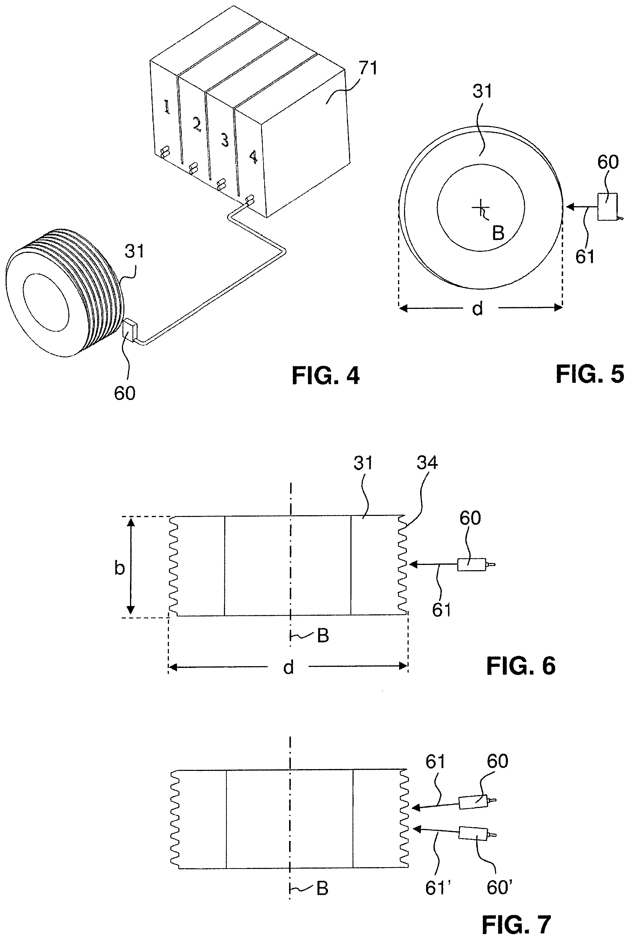

Die Fig. 4 verdeutlicht nochmals das Zusammenwirken des Abstandssensors 60 mit dem entsprechenden Steuerungsmodul 71.

In den Figuren 5 und 6 ist die Anordnung des Abstandssensors 60 relativ zur Schleifschnecke 31 illustriert. Man erkennt, dass der Messlichtstrahl 61 horizontal verläuft und senkrecht zur Drehachse der Schleifschnecke, d.h. zur Werkzeugspindelachse B, ausgerichtet ist. Denkbar sind aber auch folgende Alternativanordnungen des Abstandssensors:
- Der Messlichtstrahl 61 braucht nicht horizontal auf die Achse B ausgerichtet zu sein.
- Der Messlichtstrahl 61 braucht nicht direkt auf die Achse B ausgerichtet zu sein.
- Der Messlichtstrahl 61 braucht nicht senkrecht zur Achse B zu verlaufen.
- Insbesondere kann der Messlichtstrahl 61 nahezu parallel zur B-Achse ausgerichtet sein und somit seitlich auf das Werkzeug treffen; der Durchmesser des Werkzeugs lässt sich dann ermitteln, indem festgestellt wird, bei welcher radialen Position des Abstandssensors sprungartig eine Abstandsänderung gemessen wird.
- Der Messlichtstrahl 61 kann auf einen Reflektor treffen, der hinter dem Werkzeug angeordnet ist.
- Die Messung kann auch mit zwei Sensoren erfolgen, welche als Sender und Empfänger agieren.

Das Messprinzip des optischen Abstandssensors ist wie folgt: Der vom Abstandssensor 60 erzeugte Messlichtstrahl 61 trifft auf die Oberfläche des Messobjekts (hier die Schleifschnecke 31) und wird von dort zurück zum Abstandssensor diffus reflektiert. Der reflektierte Strahl wird vom Abstandssensor 60 erfasst, und aus den Eigenschaften des reflektierten Strahls wird von der internen Steuerung des Abstandssensors 60 der Abstand zwischen dem Abstandssensor 60 und der Oberfläche des Messobjekts berechnet.

Aus dem Stand der Technik sind verschiedene Funktionsweisen für derartige Abstandssensoren bekannt.

Gemäss einer ersten bekannten Funktionsweise wird eine Laufzeitmessung vorgenommen. Dazu wird das Anregungslicht des Messlichtstrahls hochfrequent moduliert, und es wird die aus der Laufzeit des Lichts resultierende Phasenverschiebung des mit dem Abstandssensor detektieren reflektierten Lichts gegenüber dem Anregungslicht gemessen. Aus der Phasenverschiebung ergeben sich die Laufzeit und hieraus der Abstand des Abstandssensors vom Messobjekt.

Gemäss einer zweiten bekannten Funktionsweise beruht die Abstandsmessung auf dem Triangulationsverfahren. Bei diesem Verfahren wird der Messlichtstrahl auf das Messobjekt fokussiert, und der entstehende Lichtpunkt wird mit einer im Abstandssensor lateral versetzt zur Lichtquelle angeordneten Kamera (zum Beispiel einer Kamera mit einem Zeilensensor) beobachtet. In Abhängigkeit vom Abstand des Messobjekts verändert sich der Winkel, unter dem der Lichtpunkt beobachtet wird, und entsprechend ändert sich die Lage des Abbilds des Lichtpunktes auf dem Sensor der Kamera. Mit Hilfe von Winkelfunktionen wird die Entfernung des Messobjekts vom Abstandssensor berechnet.

Dasselbe Messprinzip kann auch eingesetzt werden, um ein Abstandsprofil auf der Oberfläche des Messobjekts entlang einer Achse zu ermitteln. Der Abstandssensor wird dann auch als Profilscanner bezeichnet. Für die Messung wird ein Laserstrahl durch eine spezielle Optik zu einem Fächer aufgeweitet, der auf dem Messobjekt eine leuchtende Linie erzeugt. Das reflektierte Licht dieser Laserlinie wird auf eine Sensormatrix abgebildet. Aus dem entstehenden Abbild auf der Sensormatrix werden für jeden Punkt der Laserlinie einerseits der Abstand und andererseits die Position entlang der Laserlinie berechnet. Auf diese Weise wird ein Abstandsprofil entlang der Laserlinie ermittelt.

Alternativ kann das Profil des Werkzeuges auch mit einem Punktlaser und einer relativen Bewegung des Werkzeuges zum Sensor in Achsrichtung ermittelt werden.

Geeignete Abstandssensoren, die nach einem der genannten Prinzipien arbeiten, sind kommerziell erhältlich. Genauere Ausführungen zu den einsetzbaren Abstandssensoren erübrigen sich daher. Es sind Messgenauigkeiten im Bereich von 10 Mikrometern oder besser für die gemessenen Abstände erreichbar.

Wenn zusätzlich eine Drehung des Werkzeugs um die Werkzeugspindelachse stattfindet, kann ein Abbild der gesamten Werkzeugoberfläche erhalten werden.

Wenn die Position des Abstandssensors 60 relativ zur Werkzeugspindelachse B bekannt ist und wenn die Schleifschnecke rotiert, lässt sich aus dem gemessenen minimalen Abstand über eine Rotationsperiode hinweg der Aussendurchmesser d der Schleifschnecke 31 bestimmen. Ausserdem lassen sich weitere Kenngrössen wie z.B. die Gangzahl, die Winkellage und die Tiefe der Schleifschneckengänge ermitteln. Diese Winkellage kann dazu herangezogen werden, das Abrichtwerkzeug oder ein Werkstück korrekt in die Schleifschneckengänge einzufädeln.

Für die ermittelten Kenngrössen kann eine Konsistenzprüfung bzw. Koinzidenzprüfung durchgeführt werden. Dazu werden die ermittelten Kenngrössen mit Vergleichskenngrössen verglichen, die zuvor in die CNC-Steuerung der Maschine eingespeichert worden waren. Wenn Abweichungen bestehen, kann der Bediener durch geeignete Signale darauf aufmerksam gemacht werden.

Mit Hilfe des Abstandssensors 60 kann bei Bedarf ein Abbild der gesamten Oberfläche bzw. eines bestimmten Bereichs der Oberfläche der Schleifschnecke 31 erstellt werden. Dazu kann z.B. für eine Vielzahl von Drehwinkeln der Schleifschnecke 31 um die Werkzeugspindelachse B ein Abstandsprofil parallel zur Werkzeugspindelachse B entlang der Schneckenbreite b erstellt werden. Um ein solches Abstandsprofil zu erstellen, kann der Abstandssensor als Profilscanner ausgebildet sein, wie dies oben erläutert wurde, und/oder die Schleifschnecke 31 kann mit Hilfe des Y-Schlittens entlang der Werkzeugspindelachse B relativ zum Abstandssensor 60 verschoben werden.

Aus einem solchen Abbild eines Oberflächenbereichs lassen sich weitere Kenngrössen bestimmen, z.B. Kenngrössen, die die Flankenform der Schleifschneckengänge beschreiben.

Mithilfe eines Abbilds der Oberfläche bzw. eines Oberflächenbereichs der Schleifschnecke kann aber auch insbesondere überprüft werden, ob die Schleifschnecke beschädigt ist, zum Beispiel ob sogenannte Schleifschneckenausbrüche vorliegen. Bei einer einwandfreien Schleifschnecke wird erwartet, dass das Abbild des Oberflächenbereichs ganz bestimmte Eigenschaften aufweist. So wird z.B. erwartet, dass sich der Aussendurchmesser der Schleifscheibe entlang jedes Schleifschneckengangs nicht abrupt ändert, sondern eine konstante oder nur langsam veränderliche, stetige Funktion des Drehwinkels darstellt. Bei einem Ausbruch an einem Schneckengang erfolgt dagegen eine abrupte Änderung des Aussendurchmessers. Eine derartige Abweichung des Abbilds des Oberflächenbereichs von einem erwarteten Erscheinungsbild lässt sich ohne weiteres automatisch erkennen; entsprechende Algorithmen zur Mustererkennung sind an sich bekannt. Auf diese Weise können Beschädigungen wie Schleifscheibenausbrüche automatisch erkannt werden. Beim Vorliegen solcher Beschädigungen kann der Bediener entsprechend gewarnt werden, z.B. durch die Ausgabe eines akustischen und/ oder visuellen Warnsignals. Weiterhin kann auch mittels spezieller Software die CNC-Steuerung 70 selbsttätig ein Startsignal für automatisierte Abläufe zur Schadensbegrenzung beim Schleifen und Abrichten generieren. Wenn z.B. nur ein kleiner Schleifscheibenausbruch im Randbereich erkannt wurde, dann kann eventuell durch erneutes automatisches Abrichten die Schleifbearbeitung ohne Qualitätsminderung fortgesetzt werden.

Die Fig. 7 illustriert, dass statt eines einzigen Abstandssensors auch zwei oder mehr Abstandssensoren 60, 60' eingesetzt werden können. Insbesondere können die Messlichtstrahlen dieser Abstandssensoren in einem Winkel zueinander auf das Feinbearbeitungswerkzeug auftreffen, wie dies in der Fig. 7 gezeigt ist. In dieser Figur sind die Messlichtstrahlen 61, 61' der beiden Abstandssensoren 60, 60' auf die Werkzeugspindelachse B ausgerichtet, verlaufen jedoch nicht senkrecht zur Werkzeugspindelachse, sondern in einem Winkel von z.B. ±1-20° zu deren Normalenfläche. Dadurch können insbesondere die Flanken der Schleifschneckengänge präziser vermessen werden, als wenn nur ein einziger Messlichtstrahl eingesetzt wird, welcher senkrecht zur Werkzeugspindelachse auf das Werkzeug auftrifft.

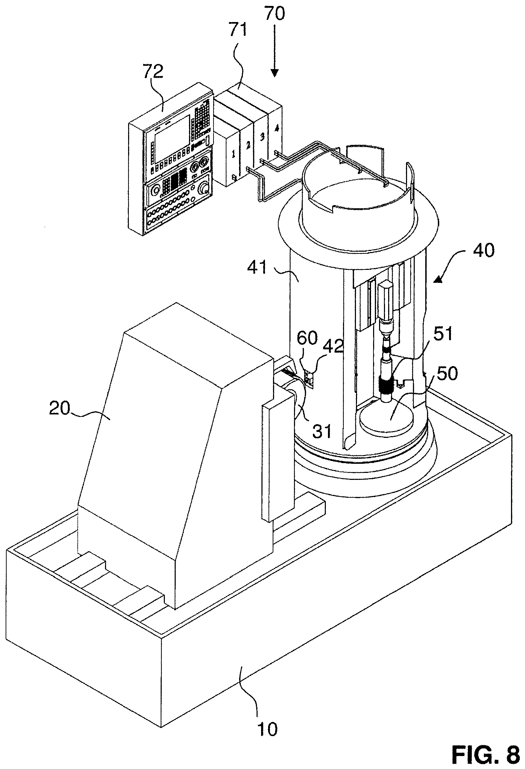

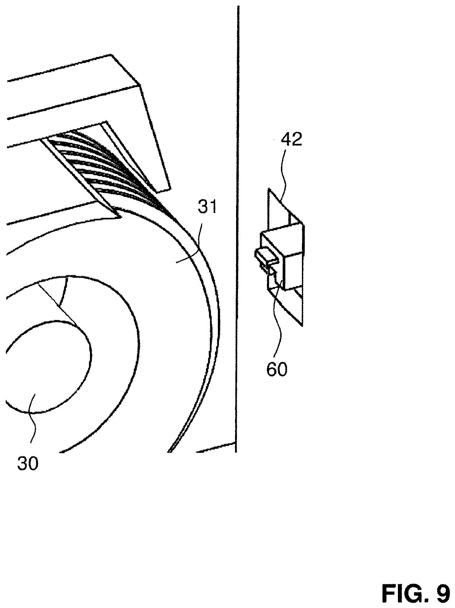

In den Figuren 8 und 9 ist eine zweite Ausführungsform einer Feinbearbeitungsmaschine illustriert. Diese weist einen berührenden Sensor 60 auf. Im vorliegenden Beispiel vermisst der Sensor 60 den Aussendurchmesser einer Schleifschnecke 31. Der Sensor 60 definiert dazu eine breite Auflagefläche, die breiter als der Abstand benachbarter Schleifschneckengänge ist. Dadurch ist sichergestellt, dass der Sensor 60 immer auf dem Aussendurchmesser der Schleifschnecke aufliegt. Der Aufbau entspricht weitgehend dem Aufbau der Maschine der Fig. 1. Im Unterschied zur Maschine der Fig. 1 ragt jedoch der Abstandssensor 60 aus der Fensteröffnung 42 der Verkleidung 41 heraus, um in Kontakt mit der Oberfläche des Feinbearbeitungswerkzeugs gebracht werden zu können. Optional kann der Sensor in dieser Ausführungsvariante automatisiert ein- und ausfahrbar gestaltet sein, so dass er bei Bedarf aus der Fensteröffnung 42 heraus vorgefahren werden kann. Zum Schutz des Abstandssensors kann auch hier ein Verschluss für die Fensteröffnung vorgesehen sein, und/oder es kann vorgesehen sein, das Innere der Verkleidung 41 mit Sperrluft zu beaufschlagen.

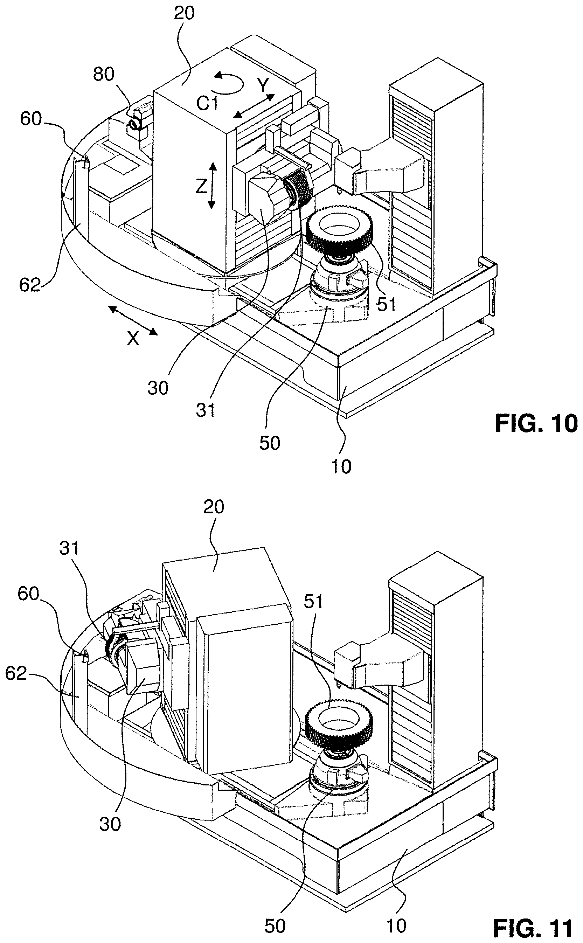

In den Figuren 10 und 11 ist eine dritte Ausführungsform einer Feinbearbeitungsmaschine illustriert. In dieser Ausführungsform ist lediglich eine einzige Werkstückspindel 50 vorhanden, die ortsfest auf dem Maschinenbett 10 angeordnet ist. Der gesamte Werkzeugträger 20 ist um eine vertikale Achse (die sogenannte C1-Achse) gegenüber dem Maschinenbett 10 in verschiedene Stellungen verschwenkbar und wie bei der ersten Ausführungsform radial zur Werkstückspindel 50 entlang der sogenannten X-Achse verschiebbar. Die Werkzeugspindel 30 ist wie bei der ersten Ausführungsform gegenüber dem Werkzeugträger 20 entlang einer vertikalen Z-Achse und entlang der Werkstückspindelachse in der Y-Richtung verschiebbar sowie um eine horizontale Achse (sogenannte A-Achse) verschwenkbar. In der Bearbeitungsstellung der Fig. 10 kann die Schleifschnecke in Eingriff mit dem Werkstück gebracht werden. Der Werkzeugträger 20 kann gegenüber dieser Bearbeitungsstellung beispielsweise um 180° um die C1-Achse verschwenkt werden. In dieser (nicht zeichnerisch dargestellten) Abrichtstellung kann die Schleifschnecke durch ein Abrichtgerät 80 abgerichtet werden. Eine Maschine mit einem solchen Maschinenkonzept ist aus der DE 196 25 370 C1 bekannt, und für weitere Details wird auf dieses Dokument verwiesen.

Der Abstandssensor 60 ist in dieser Ausführungsform mit Hilfe eines Halters 62 ortsfest am Maschinenbett 10 angebracht. In der Stellung der Fig. 11 wurde der Werkzeugträger 20 so weit verschwenkt, bis der Abstandssensor 60 der Schleifschnecke 31 gegenübersteht. In dieser Stellung kann die Schleifschnecke 31 vom Abstandssensor 60 vermessen werden.

Die Erfindung ist nicht auf die vorstehenden Ausführungsbeispiele beschränkt. Aus der vorstehenden Beschreibung wird vielmehr deutlich, dass eine Vielzahl von Abwandlungen möglich ist, ohne den Bereich der Erfindung zu verlassen. Insbesondere kann in allen Ausführungsformen statt einer Schleifschnecke auch eine Profilschleifscheibe, eine Kombination aus Schleifschnecke und Profilschleifscheibe oder eine andere Art von Feinbearbeitungswerkzeug zum Einsatz kommen. Der Abstandssensor kann statt an einem schwenkbaren Drehturm, wie das bei der ersten und zweiten Ausführungsform der Fall ist, auch an einem verschiebbaren Schlitten angeordnet sein, wobei dieser Schlitten eine oder zwei Werkstückspindeln tragen kann. Auch ist es denkbar, dass der Werkstückträger nicht zum Abstandssensor hin verschwenkt wird, wie das bei der dritten Ausführungsform der Fall ist, sondern dass der Werkstückträger zum Abstandssensor hin verschoben wird.

**BEZUGSZEICHENLISTE**

| | | | |
|---|---|---|---|
| 10 | Maschinenbett | 62 | Sensorhalter |
| 20 | Werkzeugträger | 70 | CNC-Steuerung |
| 21 | Z-Schlitten | 71 | Steuerungsmodul |
| 22 | Y-Schlitten | 72 | Bedientafel |
| 30 | Werkzeugspindel | 80 | Abrichtgerät |
| 31 | Schleifschnecke | X, Y, Z | Maschinenachsen |
| 32 | Werkzeugspindelantrieb | A | Schwenkachse Werkzeug |
| 40 | Drehturm | B | Werkzeugspindelachse Schwenkachse |
| 41 | Verkleidung | C1 | |
| 42 | Fensteröffnung | | Werkzeugträger |
| 50 | Werkstückspindel | C3 | Schwenkachse Drehturm |
| 51 | Werkstück | b | Schneckenbreite |
| 60 | Abstandssensor | d | Aussendurchmesser |
| 61 | Messlichtstrahl | | |

## Patentansprüche

1. Maschine zur Feinbearbeitung von verzahnten Werkstücken, aufweisend:
einen Werkzeugträger (20);
eine am Werkzeugträger angebrachte Werkzeugspindel (30) zum Aufspannen eines Feinbearbeitungswerkzeugs (31);
einen Werkzeugspindelantrieb (32), um die Werkzeugspindel (31) zu einer Drehung um eine Werkzeugspindelachse (B) anzutreiben;
mindestens einen Abstandssensor (60), und
eine Steuereinrichtung (71),
**dadurch gekennzeichnet, dass** die Steuereinrichtung (71) dazu ausgebildet ist, folgendes Verfahren auszuführen:
Durchführen mindestens einer Abstandsmessung zu einem auf der Werkzeugspindel (30) aufgespannten Feinbearbeitungswerkzeug (31), insbesondere einer Schleifschnecke oder einer Profilschleifscheibe, mittels des Abstandssensors (60);
Ermitteln einer Kenngrösse des Feinbearbeitungswerkzeugs (31) aus der mindestens einen Abstandsmessung, wobei es sich bei der Kenngrösse um ein Mass für einen Aussendurchmesser (d) des Feinbearbeitungswerkzeugs (31) handelt; und
Ansteuern des Werkzeugspindelantriebs (32) derart, dass die Werkzeugspindel (30) mit einer Drehzahl rotiert, die sich in Abhängigkeit vom ermittelten Aussendurchmesser (d) verändert, oder Überwachen, dass die Werkzeugspindel (30) mit einer Drehzahl angetrieben wird, die kleiner ist als eine in Abhängigkeit vom ermittelten Aussendurchmesser (d) veränderliche maximal zulässige Drehzahl.

2. Maschine nach Anspruch 1, wobei der Abstandssensor ein berührungslos arbeitender Abstandssensor, insbesondere ein optisch arbeitender Abstandssensor, oder ein berührend arbeitender Sensor, insbesondere ein gefedert ausgeführter Sensor, ist.

3. Maschine nach einem der vorhergehenden Ansprüche, wobei die Werkzeugspindel (30) zum Aufspannen einer Schleifschnecke ausgebildet ist und wobei die Steuereinrichtung (71) dazu ausgebildet ist, Abstandsmessungen für eine Vielzahl von Drehwinkeln der Werkzeugspindel (30) durchzuführen und aus den Abstandsmessungen zusätzlich mindestens eine der folgenden weiteren Kenngrössen zu ermitteln:
Gangzahl, Winkellage, Tiefe und /oder Steigung der Schleifschneckengänge;
Lage von Stirnseiten der Schleifschnecke;
Schleifschneckenbreite;
Modul der Schleifschnecke.

4. Maschine nach einem der vorhergehenden Ansprüche, wobei die Steuereinrichtung (71) dazu ausgebildet ist, mittels des Abstandssensors (60) Abstandsmessungen für eine Vielzahl von Positionen entlang der Werkzeugspindelachse (B) und für eine Vielzahl von Drehwinkeln des Feinbearbeitungswerkzeugs (31) durchzuführen, um so ein Abbild eines Oberflächenbereichs des Feinbearbeitungswerkzeugs (31) zu erhalten, und Abweichungen des ermittelten Abbilds des Oberflächenbereichs von einem erwarteten Erscheinungsbild des Oberflächenbereichs, insbesondere aufgrund von Schleifscheibenausbrüchen, zu erkennen.

5. Maschine nach einem der vorhergehenden Ansprüche, wobei die Werkzeugspindel (30) und der Abstandssensor (60) entlang der Werkzeugspindelachse (B) relativ zueinander verfahrbar sind, um Abstandsmessungen für verschiedene Positionen entlang der Werkstückspindelachse (B) durchzuführen.

6. Maschine nach einem der Ansprüche 1-4, wobei der Abstandssensor (60) einen Linienlaser umfasst, wobei der Linienlaser eine Optik aufweist, die einen Strahlfächer in einer Strahlebene erzeugt, wobei der Strahlfächer beim Auftreffen auf eine ebene Oberfläche als Linie erscheint, und wobei die Werkzeugspindel (30) und der Abstandssensor (60) derart zueinander ausrichtbar sind, dass die Strahlebene die Werkzeugspindelachse (B) enthält, um simultane Abstandsmessungen für eine Vielzahl von Positionen entlang der Werkstückspindelachse (B) durchzuführen.

7. Maschine nach einem der vorhergehenden Ansprüche, wobei die Steuereinrichtung (70) dazu ausgebildet ist, mindestens eine ermittelte Kenngrösse mit einer oder mehreren Vergleichskenngrössen zu vergleichen und Inkonsistenzen zu erkennen.

8. Maschine nach einem der vorhergehenden Ansprüche, wobei die Maschine einen bewegbaren Träger (40) aufweist, der gegenüber dem Maschinenbett (10) zwischen mehreren Stellungen bewegbar ist, und wobei der Abstandssensor (60) auf dem bewegbaren Träger (40) angeordnet ist, wobei auf dem bewegbaren Träger (40) vorzugsweise ausserdem mindestens eine Werkstückspindel (50) zum Aufspannen eines zu bearbeitenden Werkstücks (51) und/oder ein Abrichtgerät (80) angeordnet ist.

9. Maschine nach einem der vorhergehenden Ansprüche,
wobei die Maschine ein Gehäuse (41) aufweist, in dem der Abstandssensor (60) aufgenommen ist,
wobei das Gehäuse (41) eine Fensteröffnung (42) für den Abstandssensor (60) aufweist, und
wobei zum Schutz des Abstandssensors (60) vor Umwelteinflüssen die Fensteröffnung (42) durch eine Verschliessvorrichtung verschliessbar ist und/oder das Innere des Gehäuses (41) mit Sperrluft beaufschlagbar ist.

10. Verfahren zur Vermessung eines Feinbearbeitungswerkzeugs (31), das auf einer Werkzeugspindel (30) einer Feinbearbeitungsmaschine aufgespannt ist, insbesondere einer Schleifschnecke oder Profilschleifscheibe, wobei die Feinbearbeitungsmaschine einen Werkzeugspindelantrieb (32) aufweist, um die Werkzeugspindel (30) zu einer Drehung um eine Werkzeugspindelachse (B) anzutreiben, wobei das Verfahren aufweist:
Durchführen mindestens einer Abstandsmessung zum Feinbearbeitungswerkzeug (31) mit einem Abstandssensor (60);
Ermitteln einer Kenngrösse des Feinbearbeitungswerkzeugs (31) aus der mindestens einen Abstandsmessung, wobei es sich bei der Kenngrösse um ein Mass für einen Aussendurchmesser (d) des Feinbearbeitungswerkzeugs (31) handelt; und
Antreiben der Werkzeugspindel (30) mit einer Drehzahl, die sich in Abhängigkeit vom ermittelten Aussendurchmesser (d) verändert, oder Überwachen, dass die Werkzeugspindel (30) mit einer Drehzahl angetrieben wird, die kleiner ist als eine in Abhängigkeit vom ermittelten Aussendurchmesser (d) veränderliche maximal zulässige Drehzahl.

11. Verfahren nach Anspruch 10, wobei der Abstandssensor (60) ein optisch arbeitender Abstandssensor ist, der einen Messlichtstrahl (61) erzeugt, wobei das Verfahren das Ausrichten des Messlichtstrahls (61) auf das Feinbearbeitungswerkzeug (30) umfasst, und wobei vorzugsweise der Messlichtstrahl (61) derart ausgerichtet wird, dass eine durch den Messlichtstrahl (61) definierte Strahlrichtung die Werkzeugspindelachse (B) schneidet.

12. Verfahren nach Anspruch 10 oder 11, wobei das Feinbearbeitungswerkzeug (31) eine Schleifschnecke ist, wobei die Abstandsmessung für eine Vielzahl von Drehwinkeln der Schleifschnecke durchgeführt wird, und wobei aus den Abstandsmessungen zusätzlich mindestens eine der folgenden weiteren Kenngrössen ermittelt wird:
Gangzahl, Winkellage, Tiefe und /oder Steigung der Schleifschneckengänge;
Lage von Stirnseiten der Schleifschnecke;
Schleifschneckenbreite;
Modul der Schleifschnecke.

13. Verfahren nach einem der Ansprüche 10-12, wobei eine Abstandsmessung für eine Vielzahl von Positionen entlang der Werkzeugspindelachse (B) und für eine Vielzahl von Drehwinkeln des Feinbearbeitungswerkzeugs (31) durchgeführt wird, um ein Abbild mindestens eines Bereichs der Oberfläche des Feinbearbeitungswerkzeugs (31) zu erhalten, und wobei Abweichungen zwischen dem ermittelten Abbild des Oberflächenbereichs und einem erwarteten Erscheinungsbild des Oberflächenbereichs, insbesondere zur Erkennung von Schleifscheibenausbrüchen, ermittelt werden.

14. Verfahren nach einem der Ansprüche 10-13, wobei der Abstandssensor (60) einen Linienlaser umfasst, wobei der Linienlaser eine Optik aufweist, die einen Strahlfächer in einer Strahlebene erzeugt, wobei der Strahlfächer beim Auftreffen auf eine ebene Oberfläche als Linie erscheint, und wobei das Verfahren umfasst:
Ausrichten der Werkzeugspindel (30) und des Abstandssensors (60) zueinander derart, dass die Strahlebene die Werkzeugspindelachse (B) enthält, und
Durchführen von Abstandsmessungen für eine Vielzahl von Positionen entlang der Werkzeugspindelachse (B).

15. Verfahren nach einem der Ansprüche 10-14, wobei das Verfahren umfasst:
Vergleichen mindestens einer ermittelten Kenngrösse mit einer oder mehreren Vergleichskenngrössen, um Inkonsistenzen zu erkennen.

## Claims

1. A machine for finishing toothed workpieces, comprising:
a tool carrier (20);
a tool spindle (30) for chucking a finishing tool (31), the tool spindle (30) being attached to the tool carrier;
a tool spindle drive (32) for driving the tool spindle (31) so as to rotate about a tool spindle axis (B);
at least one distance sensor (60), and
a control device (71),
**characterized in that** the control device (71) is configured to perform the following method:
carrying out at least one distance measurement from a finishing tool (31) chucked on the tool spindle (30), in particular a grinding worm or a profile grinding wheel, by means of the distance sensor (60);
determining a characteristic parameter of the finishing tool (31) from the at least one distance measurement, the characteristic quantity being a measure of an outside diameter (d) of the finishing tool (31); and
controlling the tool spindle drive (32) in such a way that the tool spindle (30) rotates at a rotating speed which varies as a function of the determined external diameter (d), or monitoring that the tool spindle (30) is driven at a rotating speed which is lower than a maximum permissible speed which varies as a function of the determined external diameter (d).

2. The machine as claimed in claim 1, wherein the distance sensor is a distance sensor that operates in a non-contacting manner, in particular that operates in an optical manner, or a sensor that operates in a contacting manner, in particular wherein the distance sensor is spring-biased.

3. The machine as claimed in any one of the preceding claims, wherein the tool spindle (30) is configured for chucking a grinding worm and wherein the control device (71) is configured for carrying out distance measurements for a multiplicity of rotation angles of the tool spindle (30) and to additionally determine at least one of the following further characteristic parameters from the distance measurements:
number of starts, angular position, depth and / or pitch of the threads of the grinding worm;
position of end faces of the grinding worm;
grinding worm width;
module of the grinding worm.

4. The machine as claimed in any one of the preceding claims, wherein the control device (71) is configured to carry out, by means of the distance sensor (60), distance measurements for a multiplicity of positions along the tool spindle axis (B) and for a multiplicity of rotation angles of the finishing tool (31) so as to obtain an image of a surface region of the finishing tool (31), and to detect deviations of the obtained image of the surface region from an anticipated appearance of the surface region, in particular due to grinding wheel breakouts.

5. The machine as claimed in any one of the preceding claims, wherein the tool spindle (30) and the distance sensor (60) are displaceable in a mutually relative manner along the tool spindle axis (B) so as to carry out distance measurements for different positions along the tool spindle axis (B).

6. The machine as claimed in any one of claims 1-4, wherein the distance sensor (60) comprises a line laser, the line laser having optics that produce a beam fan in a beam plane, the beam fan appearing as a line when incident on a flat surface, and wherein the tool spindle (30) and the distance sensor (60) are arranged to be capable of being mutually aligned in such a manner that the beam plane contains the tool spindle axis (B) so as to carry out simultaneous distance measurements for a multiplicity of positions along the tool spindle axis (B).

7. The machine as claimed in any one of the preceding claims, wherein the control device (70) is configured to compare at least one determined characteristic parameter with one or a plurality of comparative characteristic parameters and to identify inconsistencies.

8. Machine according to any one of the preceding claims, wherein the machine comprises a movable carrier (40) which in relation to the machine bed (10) is movable between a plurality of positions, and wherein the distance sensor (60) is disposed on the movable carrier (40), wherein preferably at least one workpiece spindle (50) for chucking a workpiece (51) to be machined and/or a dressing apparatus (80) are/is disposed on the movable carrier (40).

9. The machine as claimed in any one of the preceding claims,
wherein the machine comprises a housing (41) in which the distance sensor (60) is received,
wherein the housing (41) has a window opening (42) for the distance sensor (60), and
wherein, for protecting the distance sensor (60) against environmental influences, the window opening (42) is closable by a closing device, and/or the interior of the housing (41) is configured to be supplied with sealing air.

10. A method for measuring a finishing tool (31) which is chucked on a tool spindle (30) of a finishing machine, in particular a grinding worm or profile grinding wheel, the finishing machine comprising a tool spindle drive (32) for driving the tool spindle (30) to rotate about a tool spindle axis (B), the method comprising:
carrying out at least one distance measurement from the finishing tool (31) using a distance sensor (60);
determining a characteristic parameter of the finishing tool (31) from the at least one distance measurement, the characteristic parameter being a measure of an external diameter (d) of the finishing tool (31); and
driving the tool spindle (30) at a rotating speed which varies as a function of the determined external diameter (d), or monitoring that the tool spindle (30) is driven at a rotating speed which is lower than a maximum permissible speed which varies as a function of the determined external diameter (d).

11. The method as claimed in claim 10, wherein the distance sensor (60) is a distance sensor that operates in an optical manner and generates a measuring light beam (61), and wherein the method comprises aligning the measuring light beam (61) to the finishing tool (30), and wherein preferably the measuring light beam (61) is aligned in such a manner that a beam direction defined by the measuring light beam (61) intersects the tool spindle axis (B).

12. The method as claimed in claim 10 or 11, wherein the finishing tool (31) is a grinding worm, wherein the distance measurement is carried out for a multiplicity of rotation angles of the grinding worm, and wherein additionally at least one of the following further characteristic parameters is determined from the distance measurements:
number of starts, angular position, depth and / or pitch of the threads of the grinding worm;
position of end faces of the grinding worm;
grinding worm width;
module of the grinding worm.

13. The method as claimed in any one of claims 10-12, wherein a distance measurement is carried out for a multiplicity of positions along the tool spindle axis (B) and for a multiplicity of rotation angles of the finishing tool (31) so as to obtain an image of at least one region of the surface of the finishing tool (31), and wherein deviations between the obtained image of the surface region and an anticipated appearance of the surface region are determined, in particular for detecting grinding wheel breakouts.

14. The method as claimed in any one of claims 10-13, wherein the distance sensor (60) comprises a line laser, the line laser having optics that produce a beam fan in a beam plane, the beam fan appearing as a line when incident on a flat surface, and wherein the method comprises:
mutually aligning the tool spindle (30) and the distance sensor (60) in such a manner that the beam plane contains the tool spindle axis (B), and
carrying out distance measurements for a multiplicity of positions along the tool spindle axis (B).

15. The method as claimed in any one of claims 10-14, wherein the method comprises:
comparing at least one determined characteristic parameter with one or a plurality of comparative characteristic parameters so as to identify inconsistencies.

## Revendications

1. Machine pour la finition de pièces dentées, présentant:
un porte-outil (20);
une broche porte-outil (30) montée sur le porte-outil pour le serrage d'un outil de finition (31);
un entraînement de broche d'outil (32) pour entraîner la broche d'outil (31) en rotation autour d'un axe de broche d'outil (B);
au moins un capteur de distance (60), et
un dispositif de commande (71),
**caractérisé en ce que** le dispositif de commande (71) est configuré pour exécuter le procédé suivant:
effectuer au moins une mesure de distance par rapport à un outil de finition (31) monté sur la broche porte-outil (30), en particulier une meule mère ou une meule disque, au moyen du capteur de distance (60);
déterminer un paramètre caractéristique de l'outil de finition (31) à partir de l'au moins une mesure de distance, le paramètre caractéristique étant une mesure d'un diamètre extérieur (d) de l'outil de finition (31); et
commander l'entraînement de broche d'outil (32) de telle sorte que la broche d'outil (30) tourne à une vitesse de rotation qui varie en fonction du diamètre extérieur (d) déterminé, ou surveiller que la broche d'outil (30) est entraînée à une vitesse de rotation qui est inférieure à une vitesse de rotation maximale admissible qui varie en fonction du diamètre extérieur (d) déterminé.

2. Machine selon la revendication 1, dans laquelle le capteur de distance est un capteur de distance fonctionnant sans contact, en particulier un capteur de distance fonctionnant de manière optique, ou un capteur fonctionnant avec contact, en particulier un capteur réalisé avec un ressort.

3. Machine selon l'une quelconque des revendications précédentes, dans laquelle la broche porte-outil (30) est conçue pour le serrage d'une meule mère et dans laquelle le dispositif de commande (71) est conçu pour effectuer des mesures de distance pour une pluralité d'angles de rotation de la broche porte-outil (30) et pour déterminer en outre, à partir des mesures de distance, au moins l'un des autres paramètres caractéristiques suivants:
nombre de filets, position angulaire, profondeur et/ou pas des filets de meule mère;
position des faces de la meule mère;
largeur de la meule mère;
module de la meule mère.

4. Machine selon l'une quelconque des revendications précédentes, dans laquelle le dispositif de commande (71) est adapté pour effectuer, au moyen du capteur de distance (60), des mesures de distance pour une pluralité de positions le long de l'axe de broche d'outil (B) et pour une pluralité d'angles de rotation de l'outil de finition (31), de manière à obtenir une image d'une zone de surface de l'outil de finition (31), et à détecter des divergences de l'image obtenue de la zone de surface par rapport à un aspect attendu de la zone de surface, notamment causées par des ébréchures de meule.

5. Machine selon l'une quelconque des revendications précédentes, dans laquelle la broche d'outil (30) et le capteur de distance (60) peuvent être déplacés l'un par rapport à l'autre le long de l'axe de broche d'outil (B) afin d'effectuer des mesures de distance pour différentes positions le long de l'axe de broche de pièce (B).

6. Machine selon l'une quelconque des revendications 1 à 4, dans laquelle le capteur de distance (60) comprend un laser à ligne, dans laquelle le laser à ligne présente une optique qui génère un éventail de faisceaux dans un plan de faisceau, l'éventail de faisceaux apparaissant comme une ligne lorsqu'il rencontre une surface plane, et dans laquelle la broche d'outil (30) et le capteur de distance (60) peuvent être alignés l'un par rapport à l'autre de telle sorte que le plan de faisceau contienne l'axe de broche d'outil (B) afin d'effectuer des mesures de distance simultanées pour une pluralité de positions le long de l'axe de broche de pièce (B).

7. Machine selon l'une des revendications précédentes, le dispositif de commande (70) étant conçu pour comparer au moins un paramètre caractéristique déterminé avec un ou plusieurs paramètres caractéristiques de comparaison et pour détecter des incohérences.

8. Machine selon l'une quelconque des revendications précédentes, dans laquelle la machine comprend un support mobile (40) qui est déplaçable par rapport au banc de machine (10) entre plusieurs positions, et dans laquelle le capteur de distance (60) est disposé sur le support mobile (40), au moins une broche porte-pièce (50) destinée à serrer une pièce à usiner (51) et/ou un appareil de dressage (80) étant de préférence en outre disposés sur le support mobile (40).

9. Machine selon l'une des revendications précédentes,
la machine comprenant un boîtier (41) dans lequel le capteur de distance (60) est logé,
le boîtier (41) comportant une ouverture de fenêtre (42) pour le capteur de distance (60), et
l'ouverture de fenêtre (42) pouvant être fermée par un dispositif de fermeture et/ou l'intérieur du boîtier (41) pouvant être alimenté en air de barrage pour protéger le capteur de distance (60) des influences environnementales.

10. Procédé de mesure d'un outil de finition (31) qui est serré sur une broche porte-outil (30) d'une machine de finition, en particulier d'une meule mère ou d'une meule disque, la machine de finition présentant un entraînement de broche porte-outil (32) pour entraîner la broche porte-outil (30) en rotation autour d'un axe de broche porte-outil (B), le procédé comprenant:
effectuer au moins une mesure de distance par rapport à l'outil de finition (31) avec un capteur de distance (60);
déterminer un paramètre caractéristique de l'outil de finition (31) à partir de la au moins une mesure de distance, le paramètre caractéristique étant une mesure d'un diamètre extérieur (d) de l'outil de finition (31); et
entraîner la broche d'outil (30) à une vitesse de rotation qui varie en fonction du diamètre extérieur (d) déterminé, ou surveiller que la broche d'outil (30) est entraînée à une vitesse de rotation qui est inférieure à une vitesse de rotation maximale admissible qui varie en fonction du diamètre extérieur (d) déterminé.

11. Procédé selon la revendication 10, dans lequel le capteur de distance (60) est un capteur de distance fonctionnant de manière optique qui génère un faisceau lumineux de mesure (61), le procédé comprenant l'orientation du faisceau lumineux de mesure (61) sur l'outil de finition (30), et dans lequel, de préférence, le faisceau lumineux de mesure (61) est orienté de telle sorte qu'une direction de faisceau définie par le faisceau lumineux de mesure (61) coupe l'axe de broche d'outil (B).

12. Procédé selon la revendication 10 ou 11, dans lequel l'outil de finition (31) est une meule mère, dans lequel la mesure de distance est effectuée pour une pluralité d'angles de rotation de la meule mère, et dans lequel au moins l'un des autres paramètres caractéristiques suivants est en outre déterminé à partir des mesures de distance:
nombre de filets, position angulaire, profondeur et/ou pas des filets de la meule mère;
position des faces de la meule mère;
largeur de la meule mère;
module de la meule mère.

13. Procédé selon l'une quelconque des revendications 10 à 12, dans lequel une mesure de distance est effectuée pour une pluralité de positions le long de l'axe de broche d'outil (B) et pour une pluralité d'angles de rotation de l'outil de finition (31) afin d'obtenir une image d'au moins une zone de la surface de l'outil de finition (31), et dans lequel des divergences entre l'image obtenue de la zone de surface et un aspect attendu de la zone de surface sont déterminés, en particulier pour détecter des ébréchures de meule.

14. Procédé selon l'une quelconque des revendications 10 à 13, dans lequel le capteur de distance (60) comprend un laser à ligne, le laser à ligne ayant une optique qui produit un éventail de faisceaux dans un plan de faisceau, l'éventail de faisceaux apparaissant comme une ligne lorsqu'il rencontre une surface plane, le procédé comprenant:
aligner la broche d'outil (30) et le capteur de distance (60) l'un par rapport à l'autre de telle sorte que le plan du faisceau contienne l'axe de la broche d'outil (B), et
effectuer des mesures de distance pour une pluralité de positions le long de l'axe de la broche porte-outil (B).

15. Procédé selon l'une quelconque des revendications 10 à 14, ledit procédé comprenant:
comparer au moins un paramètre caractéristique déterminé avec un ou plusieurs paramètres caractéristiques de comparaison afin de détecter les incohérences.
